# EUROPÄISCHE PATENTSCHRIFT

(11) **EP 3 734 818 B1**
(45) Veröffentlichungstag und Bekanntmachung des Hinweises auf die Patenterteilung: **29.06.2022**
(21) Anmeldenummer: 19171572.1
(22) Anmeldetag: 29.04.2019
(51) Int. Cl.: H02M 1/32, H02M 7/483

(54) **VERFAHREN ZUR FEHLERBEHANDLUNG EINES FEHLERS IN EINER GLEICHSPANNUNGSLEITUNG SOWIE EINE STROMRICHTERANORDNUNG ZUM DURCHFÜHREN DES VERFAHRENS**
METHOD FOR TROUBLESHOOTING IN A DIRECT CURRENT LINE AND INVERTER ASSEMBLY FOR IMPLEMENTING THE METHOD
PROCÉDÉ DE TRAITEMENT D'UN DÉFAUT DANS UNE CONDUITE DE TENSION CONTINUE AINSI QUE DISPOSITIF CONVERTISSEUR DE COURANT PERMETTANT LA MISE EN OEUVRE DUDIT PROCÉDÉ

(43) Veröffentlichungstag der Anmeldung: 04.11.2020
(73) Patentinhaber: Siemens Energy Global GmbH & Co. KG, 81739 München (DE)
(72) Erfinder: Dallmer-Zerbe, Kilian, 91088 Bubenreuth (DE); Ergin, Dominik, 91083 Baiersdorf (DE); Gafur, Ilhom, 90419 Nürnberg (DE); Kontos, Epameinondas, 90402 Nürnberg (DE); Semmler, Sebastian, 90427 Nürnberg (DE)

(56) Entgegenhaltungen:
- CN-A- 106 953 347
- CN-A- 106 953 509
- CN-U- 207 559 578
- CN-U- 208 738 855
- US-A1- 2018 166 972
- Viktor Hofmann ET AL: "Cell An Optimized Hybrid-MMC for HVDC", , 12. Mai 2016 (2016-05-12), XP055628518, Gefunden im Internet: URL:https://ieeexplore.ieee.org/ielx7/7499 335/7499336/07499380.pdf?tp=&arnumber=7499 380&isnumber=7499336&ref=aHR0cHM6Ly9pZWVle HBsb3JlLmllZWUub3JnL2Fic3RyYWN0L2RvY3VtZW5 0Lzc0OTkzODA= [gefunden am 2019-10-03]
- LEBRE JOSE R ET AL: "POD-PWM applied to circulating current control in HVDC-MMC based system", 2015 IEEE 13TH BRAZILIAN POWER ELECTRONICS CONFERENCE AND 1ST SOUTHERN POWER ELECTRONICS CONFERENCE (COBEP/SPEC), IEEE, 29 November 2015 (2015-11-29), pages 1-5, XP032875008, DOI: 10.1109/COBEP.2015.7420060 [retrieved on 2016-02-25]

## Beschreibung

Die Erfindung betrifft ein Verfahren zur Fehlerbehandlung eines Fehlers auf einer Gleichspannungsseite einer Stromrichteranordnung mit einem modularen Mehrstufenstromrichter, der Schaltmodule umfasst, die jeweils über mehrere Halbleiterschalter und wenigstens einen Energiespeicher verfügen, wobei einige der Schaltmodule Schaltmodule eines ersten Typs und einige andere der Schaltmodule Schaltmodule eines zweiten Typs sind, wobei im Betrieb der Stromrichteranordnung an Anschlussklemmen der Schaltmodule des ersten Typs jeweils eine positive Schaltmodulspannung, eine negative Schaltmodulspannung oder eine Nullspannung erzeugt werden, und an Anschlussklemmen der Schaltmodule des zweiten Typs jeweils eine positive Schaltmodulspannung oder eine Nullspannung erzeugt werden. Die Stromrichteranordnung weist eine Gleichspannungsseite zum Verbinden mit einer Gleichspannungsleitung bzw. einem Gleichspannungsnetz auf, beispielsweise einer Hochspannungsgleichstromübertragungsleitung. Ferner weist die Stromrichteranordnung eine Wechselspannungsseite zum Verbinden mit einem Wechselspannungsnetz auf, beispielsweise einem elektrischen Übertragungsnetz. Insbesondere ist die Stromrichteranordnung zum Umwandeln einer Wechselspannung des Wechselspannungsnetzes in eine Gleichspannung, oder umgekehrt, eingerichtet.

Eine Stromrichteranordnung der genannten Art ist aus dem Beitrag "Optimized Design of a Hybrid-MMC and Evaluation of Different MMC Topologies" von Viktor Hoffmann und Mark-M. Bakran (EPE'16 ECCE Europe) bekannt. Dort ist eine Stromrichteranordnung mit einem modularen Mehrstufenstromrichter offenbart, der zwischen einem Wechselspannungsnetz und einem Gleichspannungsnetz geschaltet ist. Der Mehrstufenstromrichter weist sechs Stromrichterarme mit Schaltmodulen auf, die jeweils zwischen einem Gleichspannungsanschluss und einem Wechselspannungsanschluss angeordnet sind. In jedem Stromrichterarm sind zwei Typen von Schaltmodulen eingesetzt, nämlich Vollbrückenschaltmodule und Halbbrückenschaltmodule. Bei der bekannten Stromrichteranordnung wird eine Armspannung Varm gemäß der Formel Varm = VDC/2 + m * VDC/2 * sin(omega * t + phi) in den Stromrichterarmen erzeugt, wobei VDC eine gleichspannungsseitige Spannung, omega eine (Kreis-) Frequenz repräsentiert, t Zeit bezeichnet und m ein Modulationsindex ist, der als m = 2 * VACpeak/VDC definiert ist. Mittels der erzeugten Armspannung kann ein entsprechender Armstrom bewirkt werden. VACpeak ist dabei vorzugsweise die Leiter-Mittelpunkt-Spannung des AC-Systems.

Eine Herausforderung der Hochspannungsgleichstromübertragungssysteme besteht in der Detektion und Behandlung von Isolationsfehlern auf der Gleichspannungsseite der Stromrichteranordnung, also Fehlern, die in der Gleichspannungsleitung bzw. im Gleichspannungsnetz verortet sind. Diese Isolationsfehler können beispielsweise durch umweltbedingte Kurzschlüsse zwischen einzelnen Leitern oder auch Erdschlüsse bedingt sein. Eine schnelle und zuverlässige Behandlung solcher Fehler spielt hierbei eine wichtige Rolle. In einem besonders ungünstigen Fall kann ein gleichspannungsseitiger Fehler allerdings zur Beschädigung der Stromrichteranordnung führen. Eine übliche Vorgehensweise zur Fehlerbehandlung besteht im Trennen der Stromrichteranordnung von dem Wechselspannungsnetz und dem Abwarten einer relativ langen Zeit, bis der gleichspannungsseitige Fehler behoben ist.

Bei dem gleichspannungsseitigen Fehler kann es zu einem enormen Anstieg eines gleichspannungsseitigen Stromes Idc gemäß der folgenden Gleichung kommen: dIdc/dt = (Uconv - Udc)/Lconv, wobei Uconv die vom Mehrstufenstromrichter gestellte gleichspannungsseitige Nennspannung, Udc die Spannung im Gleichspannungsnetz und Lconv die Gesamtinduktivität der Stromrichteranordnung bezeichnen. Zur aktiven Senkung des gleichspannungsseitigen Stromes Idc ist demnach eine Senkung bzw. sogar eine Umpolung der Stromrichterspannung Uconv notwendig.

In der US 2018/166972 A1 ist ein Verfahren zum Behandeln eines gleichspannungsseitigen Fehlers beschrieben, bei dem Mittels Vollbrückenschaltmodule des Stromrichters der Fehlerstrom unterbrochen wird, so dass dann mittels eines gleichspannungsseitigen Unterbrechers der Fehler geklärt werden kann.

Die Verwendung von Vollbrückenschaltmodulen zur Fehlerklärung eines gleichspannungsseitigen Fehlers ist darüber hinaus aus der CN 208 738 855 U, der CN 207 559 578 U, CN 106 953 347 A sowie dem Beitrag von Viktor Hofmann et al. "Gell An Optimized Hybrid-MMC for HVDC" bekannt.

Die Verwendung eines zusätzlichen gleichspannungsseitigen Parallelpfades zur Spannungsbegrenzung ist aus der CN 106 953 509 A bekannt.

Die Aufgabe der Erfindung besteht darin, ein artgemäßes Verfahren anzugeben, das eine möglichst zuverlässige und effiziente Fehlerbehandlung erlaubt.

Die Aufgabe wird erfindungsgemäß durch ein artgemäßes Verfahren nach Anspruch 1 gelöst, bei dem der gleichspannungsseitige Fehler detektiert wird, die Schaltmodule des ersten Typs derart angesteuert werden, dass die Polarität ihrer Energiespeicherspannungen der Polarität eines Fehlerstromes entspricht, und die Energiespeicher der Schaltmodule des ersten Typs auf eine Spannung oberhalb ihrer Nennspannung aufgeladen werden. Erfindungsgemäß werden demnach die Schaltmodule des ersten Typs dazu genutzt, die zuvor beschriebene Umpolung der Stromrichterspannung Uconv zu erzielen. Die erzeugbare Stromrichterspannung Uconv ergibt sich beim modularen Mehrstufenstromrichter aus der Summe der mittels der Schaltmodule erzeugbaren Spannungen (Schaltmodulspannungen) in den betreffenden Stromrichterarmen. Hierbei ist zu beachten, dass die Fähigkeit des Stromrichters, eine genügend hohe negative Spannung zu erzeugen, von der Anzahl der verwendeten Schaltmodule des ersten Typs abhängt. Wird die Anzahl dieser Schaltmodule in jedem Stromrichterarm jedoch entsprechend erhöht, so steigen zugleich die Betriebskosten der gesamten Stromrichteranordnung aufgrund der üblicherweise höheren elektrischen Verluste der Schaltmodule des ersten Typs gegenüber denjenigen der Schaltmodule des zweiten Typs. Erfindungsgemäß wurde erkannt, dass die Effizienz der Fehlerbehandlung dadurch erhöht werden kann, dass die Schaltmodule des ersten Typs während der Fehlerbehandlung bei einer Spannung oberhalb ihrer Nennspannung betrieben werden. Die Nennspannung bezeichnet hierbei die obere Grenze eines Nennspannungsbereiches, d.h. desjenigen Bereiches, für den die Schaltmodule für den normalen Nennbetrieb ausgelegt sind. Die Zeitdauer der Fehlerbehandlung ist meist relativ kurz (im Bereich bis zu wenigen Sekunden), so dass die Schaltmodule während dieser kurzen Zeitdauer mit einer Spannung betrieben werden können, die beispielsweise um einen Faktor 1,1 bis 1,5 höher alsBetriebsspannung ist. Auf diese Weise kann die Fehlerbehandlung beim oben beschriebenen Stromrichter vorteilhaft auch ohne Erhöhung der Betriebskosten zuverlässig durchgeführt werden. Erfindungsgemäß werden die Schaltmodule des ersten Typs auf eine Spannung oberhalb ihrer Nennspannung aufgeladen. Dazu werden die Schaltmodule des ersten Typs derart angesteuert, dass die Polarität ihrer Energiespeicherspannungen der Polarität eines Fehlerstromes entspricht. Der Fehlerstrom fließt in einer durch den Fehler bedingten Richtung (wodurch dessen Polarität bestimmt ist) durch die Stromrichteranordnung und damit auch durch die Schaltmodule. Sind die Polarität des Fehlerstromes und die Polarität des Energiespeichers gleich, so wird der Energiespeicher aufgeladen, bis der Stromfluss über den Energiespeicher unterbrochen bzw. auf einen anderen Strompfad umgeleitet wird. Die Ansteuerung der Schaltmodule wird dabei durch die Ansteuerung der Halbleiterschalter bewirkt. Die Halbleiterschalter können dementsprechend geeignete steuerbare und abschaltbare Halbleiterschalter, wie beispielsweise IGBT, IGCT, MOSFET oder dergleichen sein. Die Detektion des Fehlers kann auf jede geeignete, dem Fachmann bekannte Weise erfolgen. Zum Beispiel ist eine Überwachung der gleichspannungsseitigen Spannung und deren Einbruchs im Fehlerfall möglich. Ebenso kann ein entsprechender Stromanstieg auf der Gleichspannungsseite der Stromrichteranordnung detektiert werden.

Durch das Aufladen der bipolar stellfähigen Schaltmodule (Schaltmodule des ersten Typs) in einem modularen Mehrstufenstromrichter mit den beiden Schaltmodul-Typen in jedem Stromrichterarm kann eine wesentlich verbesserte Ausnutzung der vorhandenen Hardware erzielt werden. Hierdurch ist es möglich, die Anzahl der installierten Schaltmodule des ersten Typs zu reduzieren, was zu einer Verringerung der Verluste bzw. der Verlustkosten und der Hardwarekosten führt.

Bevorzugt wird eine Nullstromregelung der Stromrichteranordnung aktiviert. Entsprechend wird ein Stromsollwert null bei der Regelung vorgegeben. Vorzugsweise wird eine gleichspannungsseitige Stromrichterspannung auf einen negativen Wert festgelegt. Auf diese Weise kann jedenfalls ein Stromnulldurchgang erzeugt werden.

Die Aktivierung der Nullstromregelung bedeutet zweckmäßigerweise, dass ein Umschalten zwischen einer Normalregelung für den Normalbetrieb bzw. Nennbetrieb der Stromrichteranordnung und einer separaten Fehlerbehandlungsregelung durchgeführt wird. Beide können in einer Regelungseinrichtung der Stromrichteranordnung hinterlegt sein. Auf diese besonders einfache Weise kann die Aufladung der Energiespeicher der Schaltmodule des ersten Typs erreicht werden.

Vorzugsweise liegt die Nennspannung der Schaltmodule des ersten Typs und/oder des zweiten Typs zwischen 1 kV und 5 kV. Durch Verwendung der Schaltmodule im Hochspannungsbereich kann auch für eine zu stellende Spannung von mehreren Hundert Kilovolt eine relativ kleine Anzahl der Schaltmodule ausreichend sein.

Eine besonders vorteilhafte Form die Schaltmodule des ersten Typs sind die dem Fachmann bekannten Vollbrückenschaltmodule. Sie sind eine besonders günstige Variante der Schaltmodule des ersten Typs. Weitere Beispiele des Schaltmoduls des ersten Typs sind das sogenannte Clamp-Doppel-Halbbrückenmodul, das Cross-Connected-Halbbrückenmodul und das Clamp-Doppel-Vollbrückenmodul. Vorzugsweise aber nicht notwendigerweise sind alle Schaltmodule des ersten Typs gleichartig aufgebaut.

Vorzugsweise sind die Schaltmodule des zweiten Typs Halbbrückenschaltmodule. Die Halbbrückenschaltmodule können zwar zum Aufbau der negativen Spannung nicht beitragen, erlauben aber relativ niedrige Betriebskosten aufgrund relativ niedriger elektrischer Verluste im Betrieb. Vorzugsweise aber nicht notwendigerweise sind alle Schaltmodule des zweiten Typs gleichartig aufgebaut.

Zweckmäßigerweise wird der gleichspannungsseitige Strom auf null geregelt. Es ist aber auch möglich, die Fehlerbehandlung im Sinne der speziellen Regelung zu beenden, falls ein Absolutbetrag des gleichspannungsseitigen Stromes unterhalb einer vordefinierten Stromschwelle sinkt und insbesondere dort für eine vorbestimmte Zeit verbleibt. Dies ist geeigneterweise eine Bedingung, die erfüllt sein muss, um einen sogenannten Recovery-Versuch zu starten, d.h. zum Nennbetrieb zurückzukehren.

Gemäß einer Ausführungsform der Erfindung wird mittels eines zusätzlichen gleichspannungsseitigen Parallelpfades mit einer Diode und einem Ableiter eine gleichspannungsseitige negative Spannung begrenzt. Der Parallelpfad kann zwischen einem Gleichspannungspole und Erde angeordnet sein. Die Diode kann selbstredend auch eine geeignete Anzahl an einzelnen Diodenelementen umfassen. Die Begrenzung der negativen Spannung ist insbesondere im gleichspannungsseitigen Fehlerfall vorteilhaft. Durch die gleichspannungsseitigen Vorgänge beim Fehler können Spannungswellen auftreten, die sich entlang der Gleichspannungsseite zwischen der Stromrichteranordnung und dem Fehlerort verlagern bzw. ausbreiten können. Durch solche Wanderwellen treten negative Spannungen auf. Höhe, Kurvenform und Dauer der negativen Spannung hängt von Leitungstyp und Fehlerort ab. Die Amplitude der negativen Spannung kann dabei auch höher sein, als die ursprüngliche DC-Spannung vor Fehlereintritt. Der Pfad aus Diode/Ableiter begrenzt diese negative Spannung, bevor sie den Stromrichter erreichen und u.U. beschädigen kann.

Zweckmäßigerweise erfolgt ein Übergang zum Normalbetrieb nach Ablauf einer Deionisationszeit. Die Deionisationszeit ist diejenige Zeit, die dazu nötig ist, dass ein Lichtbogen an der Fehlerstelle verlöschen kann und die Luftstrecke dort wieder ihre isolierenden Eigenschaften zurückgewinnt im Sinne einer dielektrischen Wiederverfestigung an der Fehlerstelle.

Die Erfindung betrifft ferner eine Stromrichteranordnung mit einem modularen Mehrstufenstromrichter, der Schaltmodule umfasst, die jeweils über mehrere Halbleiterschalter und wenigstens einen Energiespeicher verfügen, wobei einige der Schaltmodule Schaltmodule eines ersten Typs und einige andere der Schaltmodule Schaltmodule eines zweiten Typs sind, wobei im Betrieb der Stromrichteranordnung an Anschlussklemmen der Schaltmodule des ersten Typs jeweils eine positive Schaltmodulspannung, eine negative Schaltmodulspannung oder eine Nullspannung erzeugt werden, und an Anschlussklemmen der Schaltmodule des zweiten Typs jeweils eine positive Schaltmodulspannung oder eine Nullspannung erzeugt werden.

Die Aufgabe der Erfindung ist es, eine solche Stromrichteranordnung anzugeben, die eine möglichst effiziente und zuverlässige Fehlerbehandlung gleichspannungsseitiger Fehler erlaubt.

Die Erfindung wird bei einer artgemäßen Stromrichteranordnung erfindungsgemäß durch eine Regelungseinrichtung gelöst, die zum Durchführen eines erfindungsgemäßen Verfahrens eingerichtet ist.

Die Vorteile der erfindungsgemäßen Stromrichteranordnung ergeben sich insbesondere aus den Vorteilen, die im Zusammenhang mit dem erfindungsgemäßen Verfahren beschrieben wurden.

Die Erfindung wird im Folgenden anhand der Figuren 1 bis 4 weiter erläutert.
Figur 1 zeigt ein Ausführungsbeispiel einer erfindungsgemäßen Stromrichteranordnung in einer schematischen Darstellung;
Figur 2 zeigt ein Beispiel eines Schaltmoduls des ersten Typs in einer schematischen Darstellung;
Figur 3 zeigt ein Beispiel eines Schaltmoduls des zweiten Typs in einer schematischen Darstellung;
Figur 4 zeigt ein Ablaufdiagramm eines Ausführungsbeispiels eines erfindungsgemäßen Verfahrens in einer schematischen Darstellung.

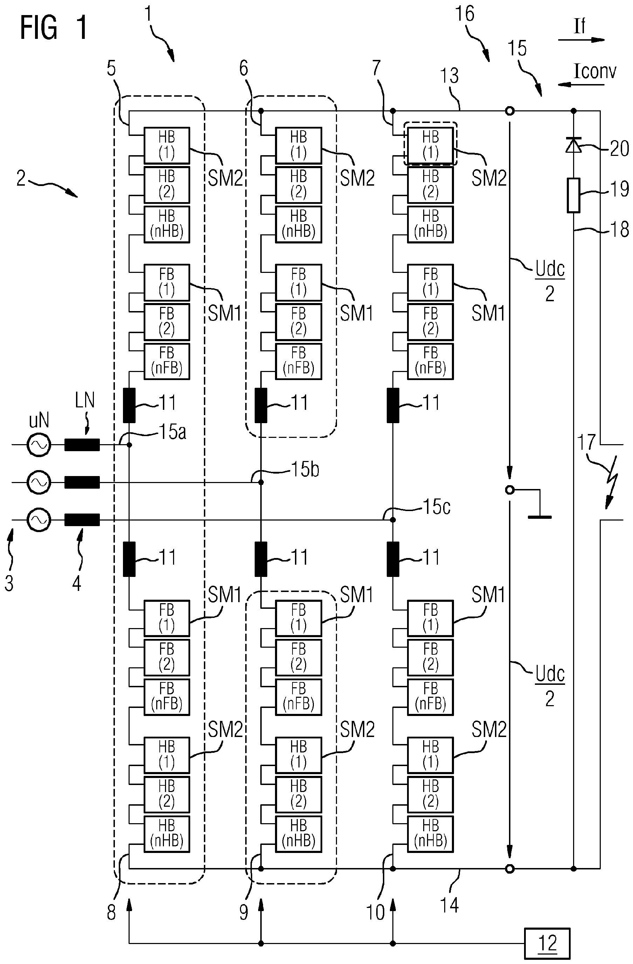

In Figur 1 ist eine Stromrichteranordnung 1 dargestellt. Die Stromrichteranordnung 1 umfasst Halbleiterschalter in Schaltmodulen, die zu einem modularen Mehrstufenstromrichter (MMC) 2 verbunden sind, der im dargestellten Beispiel zur Umwandlung einer Wechselspannung eines Wechselspannungsnetzes 3, mit dem der MMC 2 mittels eines Netztransformators 4 verbunden ist (wobei lediglich die sekundärseitigen Wicklungen LN figürlich dargestellt sind), in eine Gleichspannung Udc.

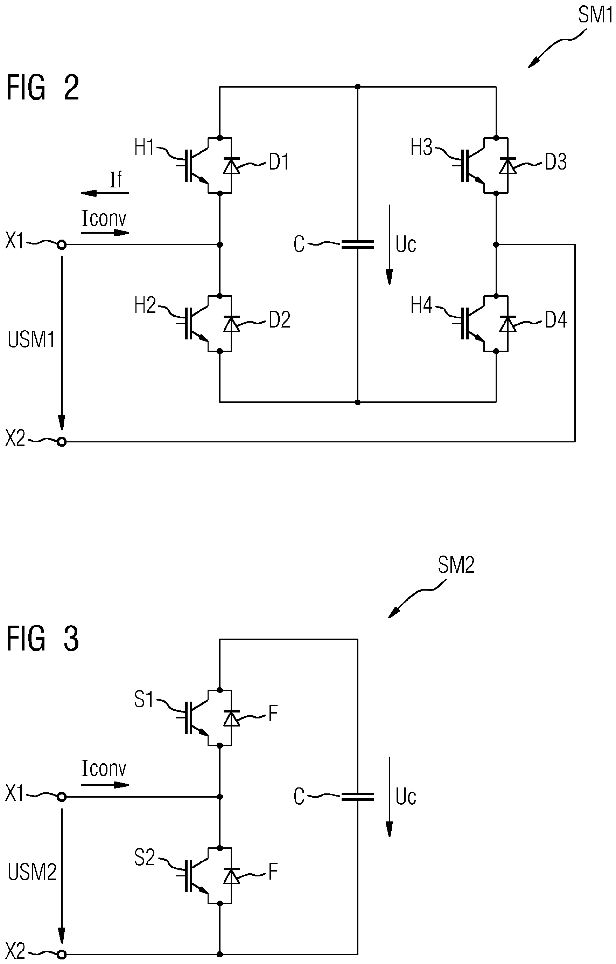

Der MMC 2 umfasst sechs Stromrichterarme 5-10, die miteinander in einer Doppelsternschaltung verbunden sind. Jeder der gleichartig aufgebauten Stromrichterarme 5-10 umfasst eine Arminduktivität 11 sowie eine Reihenschaltung zweipoliger Schaltmodule SM1 des ersten Typs und Schaltmodule SM2 des zweiten Typs. Auch die Anzahl der Schaltmodule SM1 bzw. SM2 in jedem Stromrichterzweig 5-10 ist grundsätzlich beliebig und an die jeweilige Anwendung anpassbar. Die Schaltmodule SM1 des ersten Typs können beispielsweise Vollbrückenschaltmodule, die Schaltmodule SM2 des zweiten Typs beispielsweise Halbbrückenschaltmodule sein, auf deren Aufbau in den nachfolgenden Figuren 2 und 3 näher eingegangen wird. Jedes Schaltmodul SM umfasst steuerbare Halbleiterschalter, z.B. IGBT oder dergleichen, einen Energiespeicher sowie eine Steuerungsbaugruppe, mittels der die Halbleiterschalter angesteuert werden können. Die Stromrichteranordnung 1 ist grundsätzlich nicht auf die Verwendung von genau zwei unterschiedlichen Schaltmodul-Typen eingeschränkt, so dass es darüber hinaus denkbar ist, dass die verwendete Stromrichteranordnung weitere Schaltmodul-Typen umfasst.

Die Stromrichteranlage 1 umfasst ferner eine zentrale Regelungseinrichtung 12, die zum Regeln des MMC 2 und zum Ansteuern der Schaltmodule SM eingerichtet ist. Die Regelungseinrichtung 12 erhält von einer übergeordneten Instanz Vorgaben bezüglich der geforderten Wirkleistung und Blindleistung, die von der Regelungseinheit in Sollwerte einiger Regelungsparameter umgesetzt werden. Die Regelungsparameter können beispielsweise eine wechselspannungsseitige Spannung Uac, ein wechselspannungsseitiger Strom Iac, ein gleichspannungsseitiger Strom Iconv und/oder eine gleichspannungsseitige Spannung Udc sein. In Stromrichteranlagen, die als ein symmetrischer Monopol konzipiert sind, sind eine Spannung zwischen dem positiven Gleichspannungspol 13 und dem Erdpotenzial, Udc+ = Udc/2, und eine Spannung zwischen dem negativen Gleichspannungspol 14 und dem Erdpotenzial, Udc- = Udc/2, von Bedeutung. Die beiden Glechspannungspole 13, 14 sind auf einer Gleichspannungsseite 16 der Stromrichteranordnung mit einer Gleichspannungsleitung 15 verbunden. Durch ein Blitzzeichen 17 ist ein Pol-zu-Pol-Fehler auf der Gleichspannungsseite 16 angedeutet. Die Stromrichtung des entsprechenden Fehlerstromes ist in Figur 1 durch einen Pfeil If angedeutet. Nach einer Konvention wird die Polarität von Iconv als positiv bezeichnet. Ebenso wird die Polarität der in Figur 1 dargestellten Spannungen Udc/2 als positiv bezeichnet. Diese Konvention kann entsprechend auf die Schaltmodulspannungen USM1, USM2 der einzelnen Schaltmodule SM1,2 übertragen werden.

Die Stromrichteranordnung 1 umfasst ferner einen zusätzlichen gleichspannungsseitigen Parallelpfad 18, in dem eine Diode 20 und ein Ableiter 19 angeordnet sind. Mittels dieses zusätzlichen Parallelpfades 18 kann eine gleichspannungsseitige negative Spannung begrenzt werden. Auf diese Weise können negative Auswirkungen sogenannter fehlerbedingte Wanderwelleneffekte auf den Stromrichter 2 minimiert werden.

Figur 2 zeigt ein Schaltmodul SM1 des ersten Typs, das für den Stromrichter der Figur 1 geeignet ist, und das in einer Vollbrückenschaltung geschaltet ist. Das Schaltmodul SM1 umfasst einen ersten abschaltbaren Halbleiterschalter H1, dem eine erste Freilaufdiode D1 antiparallel geschaltet ist, einen zweiten abschaltbaren Halbleiterschalter H2, dem eine zweite Freilaufdiode D2 antiparallel geschaltet ist, wobei der erste und der zweite Halbleiterschalter H1, H2 in einer ersten Halbleiterreihenschaltung miteinander verbunden sind und gleiche Durchlassrichtung aufweisen. Das Schaltmodul SM2 umfasst ferner einen dritten abschaltbaren Halbleiterschalter H3, dem eine dritte Freilaufdiode D3 antiparallel geschaltet ist, und einen vierten abschaltbaren Halbleiterschalter H4, dem eine vierte Freilaufdiode D4 antiparallel geschaltet ist, wobei der dritte und der vierte Halbleiterschalter H3, H4 in einer zweiten Halbleiterreihenschaltung miteinander verbunden sind und gleiche Durchlassrichtung aufweisen. Die beiden Halbleiterreihenschaltungen sind parallel zueinander und zu einem Energiespeicher C in Form eines Kondensators angeordnet, an dem eine Kondensatorspannung Uc ansteht. Des Weiteren umfasst das Schaltmodul SM1 ferner eine erste Anschlussklemme X1, die zwischen den Halbleiterschaltern H1, H2 der ersten Halbleiterreihenschaltung angeordnet ist, und eine zweite Anschlussklemme X2, die zwischen den Halbleiterschaltern H3, H4 der zweiten Halbleiterreihenschaltung angeordnet ist. Durch geeignete Ansteuerung der Halbleiterschalter H1-4 ist an den Anschlüssen X1, X2 eine Schaltmodulspannung USM1 erzeugbar, die der Kondensatorspannung Uc entspricht, der negativen Kondensatorspannung -Uc entspricht, oder aber eine Nullspannung. Der Energiespeicher C ist auf einen Betrieb mit einer Energiespeicher- bzw. Kondensatorspannung ausgelegt, die in einem Nennspannungsbereich liegt. Kurzzeitig kann der Energiespeicher C jedoch auch bei einer demgegenüber erhöhten Spannung betrieben werden.

In dem in Figur 2 dargestellten Fall kann durch Sperrung der Halbleiterschalter H1 und H4 erreicht werden, dass die Polarität des Fehlerstromes If der Polarität der Energiespeicherspannung Uc entspricht. In dieser Konstellation nimmt der Energiespeicher C Energie auf und wird somit aufgeladen.

Figur 3 zeigt ein Schaltmodul SM2 des zweiten Typs, das für den Stromrichter der Figur 1 geeignet ist, und das in einer Halbbrückenschaltung geschaltet ist. In einem Kondensatorzweig ist eine Parallelschaltung eines ersten Halbleiterschalters S1 und eines Kondensators C angeordnet. In einem Brückenzweig zwischen zwei Anschlüssen X1, X2 des ersten Schaltmoduls SM2 ist ein zweiter Halbleiterschalter angeordnet. Den beiden Halbleiterschaltern S1, S2 ist jeweils eine Freilaufdiode F antiparallel geschaltet. Durch geeignete Ansteuerung der beiden Halbleiterschalter S1, S2 kann an den Anschlüssen X1, X2 eine Schaltmodulspannung USM2 erzeugbar, die der Kondensatorspannung Uc entspricht, oder aber eine Nullspannung.

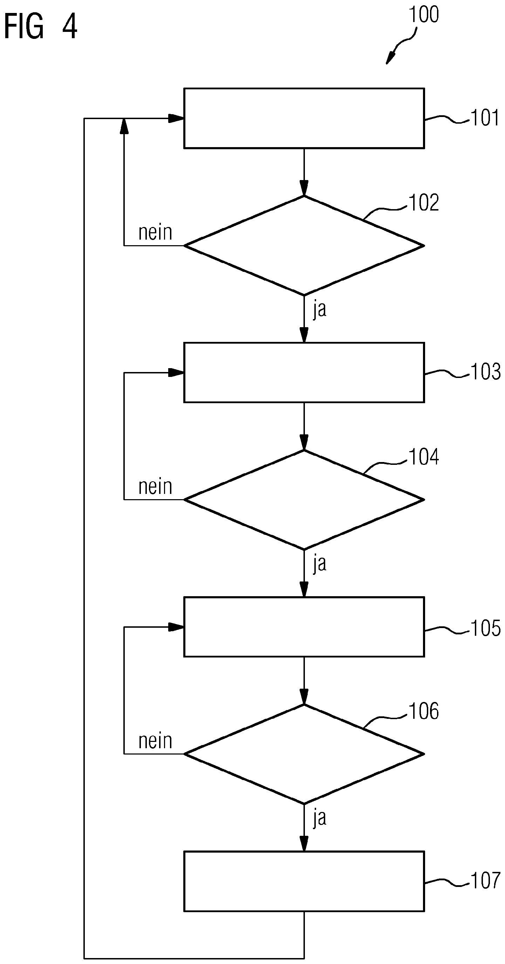

Anhand des in Figur 4 dargestellten Diagramms wird ein Ausführungsbeispiel des erfindungsgemäßen Verfahrens 100 erläutert. Das Verfahren kann beispielsweise mittels der Stromrichteranordnung der Figuren 1 bis 3 durchgeführt werden. Zunächst befindet sich die Stromrichteranordnung in einem Normalbetrieb 101, bis in einem ersten Verfahrensschritt 102 ein gleichspannungsseitiger Fehler detektiert wird. Dazu können eine oder mehrere Messvorrichtungen auf der Gleichspannungsseite des Stromrichters vorgesehen sein. Aus den so gewonnenen Messsignalen kann mittels verschiedener Auswertungskriterien ein Isolationsfehler auf der DC-Strecke ermittelt werden. Die Information über den detektierten Fehler wird an eine Regelungseinrichtung der Stromrichteranordnung übermittelt, die in einem zweiten Verfahrensschritt 103 eine Nullstromregelung für den gleichspannungsseitigen Strom Idc aktiviert. Die Schaltmodule des ersten Typs werden derart angesteuert werden, dass die Polarität ihrer Energiespeicherspannungen der Polarität eines Fehlerstromes entspricht, die Energiespeicher der Schaltmodule des ersten Typs auf eine Spannung oberhalb ihrer Nennspannung aufgeladen werden.

In einem dritten Verfahrensschritt 104 wird überprüft, ob der gleichspannungsseitige Strom Idc betragsmäßig unterhalb eine vorbestimmte Stromschwelle Ilimit sinkt, wobei hierzu der Strom Idc kontinuierlich überwacht wird. Eine zusätzliche Bedingung kann darin bestehen, dass der Strom Idc während einer vorbestimmten Zeit tlimit unterhalb der Stromschwelle Ilimit bleibt. Ist die Bedingung bzw. sind die Bedingungen erfüllt, so wird in einem vierten Verfahrensschritt eine festgelegte Deionisationszeit abgewartet. Sobald eine Überprüfung 106 ergibt, dass die Deionisationszeit abgelaufen ist, wird ein Recovery-Versuch 107 eingeleitet. Bei einem erfolgreichen Recovery-Versuch kehrt die Stromrichteranordnung in ihren Normalbetrieb zurück.

## Patentansprüche

1. Verfahren zur Fehlerbehandlung eines Fehlers auf einer Gleichspannungsseite (16) einer Stromrichteranordnung (1) mit einem modularen Mehrstufenstromrichter (2), der Schaltmodule (SM1, SM2) umfasst, die jeweils mehrere Halbleiterschalter (H1-4, S1-2) und wenigstens einen Energiespeicher (C) aufweisen, wobei einige der Schaltmodule Schaltmodule eines ersten Typs (SM1) und einige andere der Schaltmodule Schaltmodule eines zweiten Typs (SM2) sind, wobei im Betrieb der Stromrichteranordnung an Anschlussklemmen (X1,X2) der Schaltmodule des ersten Typs (SM1) jeweils eine positive Schaltmodulspannung, eine negative Schaltmodulspannung oder eine Nullspannung erzeugt werden, und an Anschlussklemmen (X1,X2) der Schaltmodule des zweiten Typs (SM2) jeweils eine positive Schaltmodulspannung oder eine Nullspannung erzeugt werden, bei dem
- der gleichspannungsseitige Fehler detektiert wird,
- die Schaltmodule des ersten Typs (SM1) derart angesteuert werden, dass die Polarität ihrer Energiespeicherspannungen der Polarität eines Fehlerstromes entspricht, und
- die Energiespeicher (C) der Schaltmodule des ersten Typs (SM1) auf eine Spannung um einen Faktor 1,1 bis 1,5 oberhalbihrer Nennspannung aufgeladen werden.

2. Verfahren nach Anspruch 1, wobei ein Sollwert einer gleichspannungsseitigen Stromrichterspannung auf einen negativen Wert festgelegt wird.

3. Verfahren nach einem der vorangehenden Ansprüche, wobei die Nennspannung der Schaltmodule des ersten Typs und/oder des zweiten Typs zwischen 1 kV und 5 kV liegt.

4. Verfahren nach einem der vorangehenden Ansprüche, wobei die Schaltmodule des ersten Typs (SM1) Vollbrückenschaltmodule sind.

5. Verfahren nach einem der vorangehenden Ansprüche, wobei die Schaltmodule des zweiten Typs (SM2) Halbbrückenschaltmodule sind.

6. Verfahren nach einem der vorangehenden Ansprüche, wobei der gleichspannungsseitige Strom auf null geregelt wird.

7. Verfahren nach einem der vorangehenden Ansprüche, wobei die Fehlerbehandlung beendet wird, falls ein Absolutbetrag des gleichspannungsseitigen Stromes unterhalb einer vordefinierten Stromschwelle sinkt und insbesondere dort für eine vorbestimmte Zeit verbleibt.

8. Verfahren nach einem der vorangehenden Ansprüche, wobei mittels eines zusätzlichen gleichspannungsseitigen Parallelpfades (18) mit einer Diode (20) und einem Ableiter (19) eine gleichspannungsseitige negative Spannung begrenzt wird.

9. Verfahren nach einem der vorangehenden Ansprüche, wobei ein Übergang zum Normalbetrieb nach Ablauf einer Deionisationszeit erfolgt.

10. Stromrichteranordnung (1) mit einem modularen Mehrstufenstromrichter (2), der Schaltmodule (SM1, SM2) umfasst, die jeweils über mehrere Halbleiterschalter (H1-4,S1-2) und wenigstens einen Energiespeicher (C) verfügen, wobei einige der Schaltmodule Schaltmodule eines ersten Typs (SM1) und einige andere der Schaltmodule Schaltmodule eines zweiten Typs (SM2) sind, wobei im Betrieb der Stromrichteranordnung (1) an Anschlussklemmen (X1,X2) der Schaltmodule des ersten Typs (SM1) jeweils eine positive Schaltmodulspannung, eine negative Schaltmodulspannung oder eine Nullspannung erzeugt werden, und an Anschlussklemmen (X1,X2) der Schaltmodule des zweiten Typs (SM2) jeweils eine positive Schaltmodulspannung oder eine Nullspannung erzeugt werden,
**gekennzeichnet durch** eine Regelungseinrichtung (12), die zum Durchführen eines Verfahrens nach einem der vorangehenden Ansprüche 1 bis 9 eingerichtet ist.

## Claims

1. Method for the fault management of a fault on a DC voltage side (16) of a converter assembly (1) having a modular multi-stage converter (2) which incorporates switching modules (SM1, SM2), each of which comprises a plurality of semiconductor switches (H1-4, S1-2) and at least one energy store (C), wherein a number of the switching modules are switching modules of a first type (SM1), and a number of other switching modules are switching modules of a second type (SM2), wherein, in the operation of the converter assembly, a positive switching module voltage, a negative switching module voltage or a zero voltage are respectively generated at terminals (X1, X2) of the switching modules of the first type (SM1), and a positive switching module voltage or a zero voltage are respectively generated at terminals (X1, X2) of the switching modules of the second type (SM2), wherein
- the DC voltage side fault is detected,
- the switching modules of the first type (SM1) are actuated such that the polarity of their energy store voltages corresponds to the polarity of a fault current, and
- the energy stores (C) of the switching modules of the first type (SM1) are charged to a voltage in excess of their rated voltage by a factor of 1.1 to 1.5.

2. Method according to Claim 1, wherein a target value for a DC voltage side converter voltage is established at a negative value.

3. Method according to one of the preceding claims, wherein the rated voltage of the switching modules of the first type and/or of the second type lies between 1 kV and 5 kV.

4. Method according to one of the preceding claims, wherein the switching modules of the first type (SM1) are full-bridge switching modules.

5. Method according to one of the preceding claims, wherein the switching modules of the second type (SM2) are half-bridge switching modules.

6. Method according to one of the preceding claims, wherein the DC voltage side current is regulated to zero.

7. Method according to one of the preceding claims, wherein fault management is terminated if an absolute magnitude of the DC voltage side current falls below a predefined current threshold, and specifically remains there for a predefined time interval.

8. Method according to one of the preceding claims, wherein, by means of an additional DC voltage side parallel path (18) incorporating a diode (20) and an arrester (19), a negative DC voltage side voltage is limited.

9. Method according to one of the preceding claims, wherein a transition to normal operation is executed further to the expiry of a deionization time.

10. Converter assembly (1) having a modular multi-stage converter (2) which incorporates switching modules (SM1, SM2), each of which comprises a plurality of semiconductor switches (H1-4, S1-2) and at least one energy store (C), wherein a number of the switching modules are switching modules of a first type (SM1), and a number of other switching modules are switching modules of a second type (SM2), wherein, in the operation of the converter assembly (1), a positive switching module voltage, a negative switching module voltage or a zero voltage are respectively generated at terminals (X1, X2) of the switching modules of the first type (SM1), and a positive switching module voltage or a zero voltage are respectively generated at terminals (X1, X2) of the switching modules of the second type (SM2),
**characterized by** a control device (12) which is configured for the execution of a method according to one of the preceding Claims 1 to 9.

## Revendications

1. Procédé de traitement d'un défaut d'un côté (16) de tension continue d'un dispositif (1) convertisseur, comprenant un convertisseur (2) modulaire à plusieurs étages, qui comprend des modules (SM1, SM2) de coupure ayant chacun plusieurs interrupteurs (H1-4, S1-2) à semiconducteurs et au moins un accumulateur (C) d'énergie, dans lequel certains des modules de coupure sont des modules de coupure d'un premier type (SM1) et certains autres des modules de coupure sont des modules de coupure d'un deuxième type (SM2), dans lequel, lorsque le dispositif convertisseur est en fonctionnement, on produit aux bornes (X1, X2) de connexion des modules de coupure du premier type (SM1), respectivement une première tension positive, une tension négative ou une tension nulle et on produit aux bornes (X1, X2) de connexion des modules de coupure du deuxième type (SM2) respectivement une tension positive ou une tension nulle, dans lequel
- on détecte le défaut du côté de la tension continue,
- on commande les modules de coupure du premier type (SM1), de manière à ce que la polarité de leurs tensions d'accumulateur d'énergie corresponde à la polarité d'un courant de défaut, et
- on charge les accumulateurs (C) d'énergie des modules de coupure du premier type (SM1) à une tension d'un facteur de 1,1 à 1,5 au-dessus de leur tension nominale.

2. Procédé suivant la revendication 1, dans lequel on fixe à une valeur négative une valeur de consigne d'une tension de convertisseur du côté de la tension continue.

3. Procédé suivant l'une des revendications précédentes, dans lequel la tension nominale des modules de coupure du premier type et/ou du deuxième type est comprise entre 1 kV et 5kV.

4. Procédé suivant l'une des revendications précédentes, dans lequel les modules de coupure du premier type (SM1) sont des modules de coupure à pont complet.

5. Procédé suivant l'une des revendications précédentes, dans lequel le module de coupure du deuxième type (SM2) sont des modules de coupure à demi-pont.

6. Procédé suivant l'une des revendications précédentes, dans lequel on règle à zéro le courant du côté de la tension continue.

7. Procédé suivant l'une des revendications précédentes, dans lequel on met fin au traitement de défaut, si une valeur absolue du courant du côté de la tension continue s'abaisse en-dessous d'un seuil de courant défini et y reste notamment pendant un temps défini à l'avance.

8. Procédé suivant l'une des revendications précédentes, dans lequel, au moyen d'un chemin (18) parallèle supplémentaire du côté de la tension continue, comprenant une diode (20) et un parafoudre (19), on limite une tension négative du côté de la tension continue.

9. Procédé suivant l'une des revendications précédentes, dans lequel il s'effectue une transition vers le fonctionnement normal, après l'expiration d'un temps de déionisation.

10. Dispositif (1) convertisseur, comprenant un convertisseur (2) modulaire à plusieurs étages, qui comprend des modules (SM1, SM2) de commutation, qui disposent chacun de plusieurs interrupteurs (H1-4, S1-2) à semiconducteurs et d'au moins un accumulateur (C) d'énergie, dans lequel certains des modules de coupure sont des modules de coupure d'un premier type (SM1) et certains autres des modules de coupure sont des modules de coupure d'un deuxième type (SM2), dans lequel , lorsque le dispositif convertisseur est en fonctionnement, on produit aux bornes (X1, X2) de connexion des modules de coupure du premier type (SM1), respectivement une première tension positive, une tension négative ou une tension nulle et on produit aux bornes (X1, X2) de connexion des modules de coupure du deuxième type (SM2) respectivement une tension positive ou une tension nulle,
**caractérisé par** un dispositif (12) de régulation, qui est conçu pour effectuer un procédé suivant l'une des revendications 1 à 9 précédentes.
